# EUROPÄISCHE PATENTANMELDUNG

(11) **EP 4 414 297 A1**
(43) Veröffentlichungstag der Anmeldung: **14.08.2024**
(21) Anmeldenummer: 23201498.5
(22) Anmeldetag: 04.10.2023
(51) Int. Cl.: B65G 19/02, B65B 35/36, B65G 19/26, B65G 23/23, B65G 54/00

(54) **VORRICHTUNG UND VERFAHREN ZUM BEWEGEN VON VERPACKUNGEN**

(30) Priorität: 09.02.2023 DE 102023103138
(71) Anmelder: Theegarten-Pactec GmbH & Co. KG, 01237 Dresden (DE)
(72) Erfinder: Irrgang, Sebastian, 01279 Dresden (DE)
(74) Vertreter: Grünecker Patent- und Rechtsanwälte PartG mbB

(57) **Zusammenfassung**

Eine erfindungsgemäße Vorrichtung (1) zum Bewegen von Verpackungen (2b) umfasst mindestens ein Führungssystem mit einer feststehenden Führungsschiene (3) und einer Vielzahl von an der Führungsschiene (3) geführten Transporteinheiten (4), die entlang einer Bewegungsrichtung (x) voneinander unabhängig geschwindigkeits- und/oder positionsgeregelt antreibbar angeordnet sind, wobei jede Transporteinheit (4) mindestens ein Greifmittel (5) aufweist, das zwischen einer Eingriffsstellung, bei welcher das mindestens eine Greifmittel (5) die Verpackung (2b) in der Bewegungsrichtung (x) mitbewegt, und einer Freigabestellung, bei welcher das mindestens eine Greifmittel (5) von der Verpackung (2b) getrennt ist, bewegbar an der jeweiligen Transporteinheit (4) gelagert ist. Zur Vereinfachung der Ausführung einer solchen Vorrichtung (1) sind zwei in Bewegungsrichtung (x) benachbarte Transporteinheiten (4) jeweils mechanisch derart miteinander gekoppelt, dass durch eine Veränderung eines zwischen diesen zwei Transporteinheiten (4) entlang der Bewegungsrichtung (x) bestehenden Abstandes (Δx) die Greifmittel (5) dieser zwei Transporteinheiten (4) von der Eingriffsstellung in die Freigabestellung oder umgekehrt überführbar sind.

## Beschreibung

Die vorliegende Erfindung betrifft eine Vorrichtung und ein Verfahren zum Bewegen von Verpackungen, insbesondere Schachteln, gemäß dem Oberbegriff des unabhängigen Patentanspruchs 1 und des unabhängigen Patentanspruchs 16. Sie betrifft ebenfalls eine Verpackungsmaschine, die mit mindestens einer vorgenannten Vorrichtung ausgerüstet ist.

Ein grundsätzliches Problem bei vielen Verpackungsmaschinen ist, dass die Befüllstrecke, entlang welcher das Befüllen von Verpackungen, insbesondere Kartonschachteln, mit der zu verpackenden Ware erfolgt, mehr parallele Vorgänge benötigt, als durch die geometrischen Randbedingungen der vorgelagerten Zuführung von Verpackungszuschnitten und leeren Verpackungen und des nachgelagerten Verschließvorganges der befüllten Verpackungen möglich wären.

Gleichzeitig befinden sich die der Befüllstrecke vorgelagerten und nachgelagerten Transportstrecken für Verpackungszuschnitte und (leere oder befüllte) Verpackungen oftmals deutlich unterhalb ihres Leistungslimits.

Bekannte Lösungen des Wettbewerbes sind in bestehende Verpackungsmaschinen, wie Kartoniersysteme für die Zweitverpackung von erstverpackten Produkten oder Produktgruppen, häufig nicht oder nicht in wirtschaftlich und/oder geometrisch sinnvoller Weise integrierbar. Dies liegt daran, dass solche Lösungen i. d. R. für alle Arbeitsstationen (wie zum Aufrichten der zugeführten Verpackungszuschnitte, zum Befüllen der aufgerichteten Verpackungen mit Produkten oder Produktgruppen und zum Verschließen der aufgerichteten, befüllten Verpackungen) von der gleichen Anzahl paralleler Arbeitsvorgänge ausgehen, was aber - wie oben dargelegt - meist nicht der Realität entspricht. Insbesondere die Arbeitsstation zum Befüllen der zugeführten, aufgerichteten Verpackungen stellt regelmäßig in Bezug auf die für sich genommen dynamisch hochleistungsfähige Verpackungsmaschine eine als "bottle neck" oder Engpass bezeichnete Kapazitätsgrenze in der Produktionskette dar.

Um hier Abhilfe zu schaffen und das Entkoppeln der Arbeitsstationen (d. h. die Realisierung einer unterschiedlichen Zahl paralleler Arbeitsvorgänge) zu ermöglichen, ist eine Vorrichtung bzw. ein Verfahren der oben im ersten Beschreibungsabsatz genannten Art aus der als nächstliegender Stand der Technik anzusehenden EP 3 230 181 B1 bekannt. Genauer gesagt ist die Offenbarung dieses Dokumentes auf eine Transportvorrichtung für eine Verpackungsmaschine gerichtet, die zum Überführen von Verpackungsgruppen, insbesondere Gruppen von Kartonschachteln und/oder Kartonzuschnitten, entlang einer Transportstrecke aus zumindest einer ersten Verpackungsgruppenanordnung in einem ersten Transportstreckenabschnitt in zumindest eine weitere Verpackungsgruppenanordnung in zumindest einem weiteren Transportstreckenabschnitt dient. Transporteinheiten dieser bekannten Transportvorrichtung sind in einer Transportrichtung und in einer der Transportrichtung entgegengesetzten Rückholrichtung unabhängig antreibbar, wobei die Transporteinheiten jeweils zumindest ein Mitnahmeelement aufweisen, das dazu vorgesehen ist, in zumindest einem Betriebszustand die jeweilige Transporteinheit mit einer Verpackung der zu überführenden Verpackungsgruppe zumindest während des Überführens vom ersten Transportstreckenabschnitt in den zumindest einen weiteren Transportstreckenabschnitt zu koppeln.

Darüber hinaus wird in EP 3 230 181 B1 vorgeschlagen, dass in einem weiteren Verfahrensschritt die entkoppelten Mitnahmeelemente in einer Rückholrichtung vom weiteren Transportstreckenabschnitt zurück in den ersten Transportstreckenabschnitt überführt werden. Die Transporteinheiten mit den Mitnahmeelementen können daher in derselben Bewegungsebene in der Transportrichtung die Verpackungsgruppen überführen und in einer Rückführbewegung wieder in den ersten Transportstreckenabschnitt überführt werden. Somit können Vorrichtungen, um die Transporteinheiten in einem Rücklauf in einer weiteren Bewegungsebene zurückzuführen, entfallen und die Transportvorrichtung kann kompakt und kostengünstig gestaltet werden.

Allerdings wird in EP 3 230 181 B1 ebenfalls erwähnt, dass die Transporteinheiten jeweils zumindest ein aktives Antriebsmittel aufweisen, das dazu vorgesehen ist, das jeweils zumindest eine Mitnahmeelement der jeweiligen Transporteinheit mit der Koppelbewegung anzutreiben. In EP 3 230 181 B1 wird ferner explizit angegeben, was unter einem solchen "aktiven Antriebsmittel" zu verstehen ist. Demnach soll im Einklang mit der geläufigen Bedeutung dieses Begriffs unter einem "aktiven Antriebsmittel" insbesondere ein Antriebsmittel verstanden werden, das dazu vorgesehen ist, die Koppelbewegung mit Hilfe einer Energieumwandlung zu erzeugen, wie ein Pneumatikzylinder oder bevorzugt ein elektrischer Antrieb (z.B. Servomotor) oder ein Hubmagnet.

Die in EP 3 230 181 B1 erforderliche externe Bewegungseinleitung der Mitnahmeelemente durch die Anbringung eines aktiven Antriebsmittels (Aktors, wie eines Pneumatikzylinders, Servomotors, Hubmagneten o.ä.) auf den Transporteinheiten ist aus mehreren Gründen als nachteilhaft anzusehen.

Zunächst einmal ist das Vorsehen zusätzlicher Aktoren und somit auch die Eingliederung zusätzlicher Energiezuführungen, Sensoren und Steuerungsalgorithmen für Betrieb und Steuerung dieser zusätzlichen Aktoren unweigerlich mit Zusatzkosten verbunden, was auf dem hart umkämpften, stark fragmentierten Markt der Verpackungstechnik kaum zu tolerieren ist.

Außerdem bedeutet das Vorsehen zusätzlicher Aktoren, dass die Transporteinheiten jeweils ein Zusatzgewicht mitbewegen müssen, was sich in einem höheren Energieverbrauch und somit in einer weiter verringerten Wirtschaftlichkeit der Transportvorrichtung niederschlägt.

Schließlich werden mit dem Vorsehen zusätzlicher, individuell betätigbarer Aktoren und Mittel zu ihrer Energieversorgung und Ansteuerung weitere potenzielle Fehlerquellen in die Transportvorrichtung eingeführt, was die Fehlererkennung erschwert und sich gerade bei hoher Ausbringungsleistung negativ auf die Zuverlässigkeit der Transportvorrichtung auswirkt.

Ausgehend von dem oben erläuterten Stand der Technik macht es sich die vorliegende Erfindung zur Aufgabe, eine Vorrichtung und ein Verfahren zum Bewegen von Verpackungen, insbesondere Schachteln, anzugeben, die einen intelligenten Verpackungstransport zur Realisierung mehrerer paralleler Arbeitsvorgänge (wie Aufrichten, Befüllen und Verschließen) mit unterschiedlichen Taktzeiten auf eine einfachere und somit wirtschaftlichere Weise ermöglichen.

Gelöst wird diese Aufgabe durch eine Vorrichtung zum Bewegen von Verpackungen, insbesondere Schachteln, mit den Merkmalen des unabhängigen Patentanspruchs 1 und ein entsprechendes Verfahren zum Bewegen von Verpackungen, insbesondere Schachteln, mit den Merkmalen des unabhängigen Patentanspruchs 16. Weitere vorteilhafte Ausgestaltungen der vorliegenden Erfindung sind Gegenstand der abhängigen Patentansprüche.

Im Einzelnen ist erfindungsgemäß vorgesehen, dass eine Vorrichtung zum Bewegen von Verpackungen, insbesondere Schachteln, eine Vielzahl von Transporteinheiten umfasst, die entlang einer Bewegungsrichtung voneinander unabhängig geschwindigkeits- und/oder positionsgeregelt antreibbar angeordnet sind. Hierbei weist jede Transporteinheit mindestens ein Greifmittel auf, das zwischen einer Eingriffsstellung, bei welcher das mindestens eine Greifmittel den Verpackungszuschnitt oder die Verpackung in der Bewegungsrichtung mitbewegt, und einer Freigabestellung, bei welcher das mindestens eine Greifmittel vom Verpackungszuschnitt oder von der Verpackung getrennt ist, bewegbar an der jeweiligen Transporteinheit gelagert ist. Weiterhin ist erfindungsgemäß vorgesehen, dass zwei in Bewegungsrichtung benachbarte Transporteinheiten jeweils mechanisch derart miteinander gekoppelt sind, dass durch eine Veränderung eines zwischen diesen zwei Transporteinheiten entlang der Bewegungsrichtung bestehenden Abstandes die Greifmittel dieser zwei Transporteinheiten von der Eingriffsstellung in die Freigabestellung oder umgekehrt überführbar sind.

Demzufolge kann bei einer solchen erfindungsgemäßen Vorrichtung vorteilhafterweise auf die Installation zusätzlicher Aktoren in den Transporteinheiten (und somit auch auf die zur Energieversorgung und Ansteuerung solcher Aktoren erforderlichen Leitungen zu den Transporteinheiten) verzichtet werden. Stattdessen wird die Überführung der Greifmittel in den Transporteinheiten von der Eingriffsstellung in die Freigabestellung und umgekehrt durch eine mechanische Kopplung zwischen zwei in Bewegungsrichtung benachbarten Transporteinheiten erreicht. Durch diese mechanische Kopplung wird eine Änderung des Abstandes zwischen den zwei benachbarten Transporteinheiten in eine Bewegung der Greifmittel (zum Ergreifen oder zum Freigeben eines Verpackungszuschnittes oder einer Verpackung) umgesetzt.

In ausgesprochen effizienter Weise kann somit die ohnehin für einen intelligenten Verpackungstransport vorgesehene, voneinander unabhängige, geschwindigkeits- und/oder positionsgeregelte Antreibbarkeit der einzelnen Transporteinheiten entlang der Bewegungsrichtung gleichzeitig dazu ausgenutzt werden, um die Greifmittel in den einzelnen Transporteinheiten in die gewünschte Stellung zu bringen. Wird beispielsweise durch die individuelle Bewegungssteuerung der einzelnen Transporteinheiten der Abstand zwischen zwei benachbarten Transporteinheiten auf oder unter einen bestimmten Sollwert reduziert, dann löst die mechanische Kopplung zwischen diesen zwei benachbarten Transporteinheiten das Überführen der entsprechenden Greifmittel in die Eingriffsstellung aus. Wird hingegen beispielsweise der durch die individuelle Bewegungssteuerung der einzelnen Transporteinheiten eingestellte Abstand zwischen zwei benachbarten Transporteinheiten auf oder über einen bestimmten Sollwert eingestellt, dann lässt die mechanische Kopplung der zwei benachbarten Transporteinheiten (ggf. unter Zuhilfenahme eines Rückstellmittels) zu, dass die entsprechenden Greifmittel wieder in ihre Freigabestellung zurückkehren.

In einer bevorzugten Ausführungsform der Erfindung ist vorgesehen, dass das mindestens eine Greifmittel in der einen der zwei benachbarten Transporteinheiten und das mindestens eine Greifmittel in der anderen der zwei benachbarten Transporteinheiten derart voneinander beabstandet sind, dass diese Greifmittel in der Eingriffsstellung jeweils an in der Bewegungsrichtung gegenüberliegenden Seiten des Verpackungszuschnittes oder der Verpackung zur Anlage kommen.

Dementsprechend wird im Falle der Änderung eines Verpackungsformates jeweils die mechanische Kopplung zwischen zwei benachbarten Transporteinheiten mechanisch so nachjustiert, dass ein Abstand zwischen den Greifmitteln in Eingriffsstellung einer Länge der zu transportierenden Verpackungszuschnitte oder Verpackungen in Bewegungsrichtung entspricht. Ein solches einmaliges Nachjustieren bei Formatwechsel reicht aus, um im späteren Betrieb der Vorrichtung auf zuverlässige Weise das Aufnehmen, Bewegen und Abgeben der Verpackungszuschnitte und/oder Verpackungen sicherzustellen, ohne hierbei auf die Verwendung zusätzlicher Aktoren, Sensoren und Steuergeräte angewiesen zu sein.

Eine weitere bevorzugte Ausführungsform zeichnet sich dadurch aus, dass die Vielzahl von Transporteinheiten berührungslos magnetisch oder pneumatisch gelagert sind.

Aus einer berührungsfreien (magnetischen oder pneumatischen) Lagerung der Transporteinheiten ergeben sich mehrere vorteilhafte Eigenschaften, wie keine mechanische Reibung, hohe Verschleißfestigkeit, Schmiermittelfreiheit und die Möglichkeit einer hermetischen Kapselung der Transporteinheit.

Alternativ zu der vorgenannten Variante ist es erfindungsgemäß besonders bevorzugt, dass die erfindungsgemäße Vorrichtung weiter mindestens ein Führungssystem mit einer feststehenden Führungsschiene, an der die Vielzahl von Transporteinheiten geführt sind, umfasst.

Beispielsweise mittels Führungsrollen lassen sich die Transporteinheiten mühelos an der Führungsschiene verschiebbar befestigen, die auf diese Weise mehr Stabilität und Präzision bei der entlang der Bewegungsrichtung erfolgenden Transportbewegung der Verpackungen bietet.

Eine weitere bevorzugte Ausführungsform der Erfindung ist dadurch gekennzeichnet, dass das mindestens eine Greifmittel in der Eingriffsstellung zumindest teilweise aus einer die zu bewegenden Verpackungszuschnitte und/oder Verpackungen tragenden Oberfläche der Führungsschiene hervorsteht und das mindestens eine Greifmittel in der Freigabestellung vollständig unterhalb dieser Oberfläche der Führungsschiene liegt.

Eine solche Anordnung der Greifmittel ermöglicht es, die Verpackungszuschnitte oder Verpackungen in Bewegungsrichtung den jeweiligen Arbeitsstationen zuzuführen bzw. zu entnehmen und nach Abschluss der Arbeitsvorgänge die Transporteinheiten mit den unter das Niveau der Bewegungsbahn eingetauchten Greifmitteln wieder entgegen der Bewegungsrichtung zu ihrer Ausgangsposition zurückzuholen.

Ferner ist bevorzugt vorgesehen, dass das mindestens eine Greifmittel um eine Drehachse drehbar und/oder entlang einer Linearachse verschiebbar an einem in der Bewegungsrichtung bewegbaren Schlitten der Transporteinheit gelagert ist, wobei diese Drehachse und/oder diese Linearachse mit der Bewegungsrichtung einen Winkel, insbesondere einen rechten Winkel, einschließt.

Die erfindungsgemäße mechanische Kopplung bewirkt, dass eine Bewegung eines Schlittens (relativ zu einem damit gekoppelten benachbarten Schlitten) eine gleichzeitige Bewegung des zugehörigen Greifmittels hervorruft, deren Richtung die der Schlittenbewegung kreuzt, um das Greifmittel z. B. teilweise aus der Oberfläche der Führungsschiene herausheben zu können und so in Anlage mit der zu transportierenden Verpackung zu bringen.

Eine besonders zweckmäßige weitere Ausführungsform besteht darin, dass die mechanische Kopplung mittels einer Schubstange erfolgt, deren eines Ende das mindestens eine Greifmittel in einer der zwei benachbarten Transporteinheiten kontaktiert und deren anderes Ende das mindestens eine Greifmittel in der anderen der zwei benachbarten Transporteinheiten kontaktiert.

Infolge dieses endseitigen Kontaktes zwischen der Schubstange und den Greifmitteln der benachbarten Transporteinheiten wird im Falle einer Verringerung des Abstandes zwischen diesen benachbarten Transporteinheiten jeweils eine Kraft auf die Greifmittel ausgeübt. Diese Kraft wird dazu verwendet, um jeweils die Bewegung der Greifmittel von der Freigabestellung (z.B. von einer unter die Oberfläche der Führungsschiene abgesenkten Stellung) zur Eingriffsstellung (z.B. zu einer über die Oberfläche der Führungsschiene angehobenen Stellung) anzutreiben.

In diesem Zusammenhang ist es insbesondere bevorzugt, dass die Schubstange in den zwei benachbarten Transporteinheiten jeweils linear verschiebbar geführt ist.

Die linear verschiebbare Lagerung der Schubstange in den zwei benachbarten Transporteinheiten sorgt dafür, dass bei einer Änderung des Abstandes zwischen diesen zwei benachbarten Transporteinheiten eine Kraft in einer gleichbleibenden Richtung von der Schubstange auf die Greifmittel ausgeübt wird, die mit den Enden der Schubstange in Kontakt stehen.

Alternativ kann jedoch vorgesehen sein, dass die Schubstange an ihren beiden Enden jeweils mit dem mindestens einen Greifmittel gelenkig verbunden ist.

In diesem Fall liegt keine lineare Lagerung der Schubstange vor, da die Schubstange aufgrund der beidseitigen Gelenkverbindung ihre Neigung gegenüber den Greifmitteln in den beiden benachbarten Transporteinheiten verändern können muss.

Gemäß einer weiteren bevorzugten Ausführungsform der Erfindung ist das Greifmittel als Hebel ausgebildet, wobei ein erster Hebelarm an seinem einen Ende drehbar gelagert ist und an seinem anderen Ende mit einem gegenüber dem ersten Hebelarm abgewinkelten zweiten Hebelarm fest verbunden ist, und wobei der erste Hebelarm mit dem Ende der Schubstange in Kontakt steht und der zweite Hebelarm an seinem vom ersten Hebelarm abgewandten Ende mit mindestens einem, gegenüber dem zweiten Hebelarm abgewinkelten Greiffinger fest verbunden ist, der in der Eingriffsstellung am Verpackungszuschnitt oder der Verpackung anliegt, um diesen oder diese in der Bewegungsrichtung mitzubewegen.

Eine solche Ausbildung des Greifmittels hat sich als besonders vorteilhaft herausgestellt, um auf eine konstruktionell einfache und dennoch zuverlässige Weise eine Abstandsänderung zwischen den zwei benachbarten Transporteinheiten in eine gleichzeitige Eingriffs- und Außereingriffsbewegung des Greifmittels umzusetzen. Diese Abstandsänderung ruft eine Bewegung der verschiebbar gelagerten Schubstange entlang ihrer Längsachse relativ zu jeder der zwei benachbarten Transporteinheiten hervor. Durch diese Relativbewegung wird jeweils der erste Hebelarm und somit auch der mit dem Ende des ersten Hebelarms verbundene zweite Hebelarm in eine Drehung um eine Drehachse am freien Ende des ersten Hebelarms versetzt. Diese Drehbewegung kann z.B. dazu führen, dass das vom ersten Hebelarm abgewandte Ende des zweiten Hebelarms nahe an eine die zu bewegende Verpackung tragende Oberfläche der Führungsschiene gebracht wird. An diesem Ende des zweiten Hebelarms angeformte Greiffinger können infolgedessen zumindest teilweise aus der die Verpackung tragenden Oberfläche herausragen, um schonend mit der Verpackung in Anlage gebracht zu werden und diese dann in der Bewegungsrichtung der Transporteinheit mitzubewegen.

Gemäß einem weiteren bevorzugten Ausführungsbeispiel der erfindungsgemäßen Vorrichtung besitzt die Führungsschiene eine in einer Horizontalebene liegende, offene, insbesondere lineare, Form.

Besitzt die Vorrichtung eine offene, lineare Form, dann wird der zusätzliche Vorteil erreicht, dass leere oder gefüllte Verpackungen nicht mehr um Kurven gefahren werden müssen, wo eine genaue Verpackungsführung oftmals schwierig ist. Auch kann somit auf teure und leistungsbegrenzende Kurvensegmente von Transportsystemen verzichtet werden.

Besonders bevorzugt ist es, dass die Transporteinheiten mit dem jeweils mindestens einen in der Freigabestellung befindlichen Greifmittel in einer zur Bewegungsrichtung entgegengesetzten Rückführrichtung reversierend bewegbar sind.

Nach Abgabe der befüllten und verschlossenen Verpackungen können die Transporteinheiten unmittelbar nach Ende des jeweiligen Transportbetriebes den Reversierbetrieb aufnehmen. Durch die vorhandene mechanische Kopplung können im Reversierbetrieb die Abstände zwischen zwei benachbarten Transporteinheiten so eingestellt werden, dass die zugehörigen Greifmittel wieder in ihre Freigabestellung (z. B. in ihre zurückgezogene Stellung unterhalb der verpackungstragenden Oberfläche der Führungsschiene) zurückkehren. Somit können in diesem Reversierbetrieb (mit Greifmitteln in Freigabestellung) die Transporteinheiten bei einer besonders kompakten Bauart der erfindungsgemäßen Vorrichtung sogar entlang der gleichen Führungsschiene wie beim Transportbetrieb, jedoch in der Gegenrichtung (Rückführrichtung) wieder an den Anfang der Transportstrecke bewegt werden.

Weitere Vorteile und Merkmale der Erfindung ergeben sich aus den übrigen Patentansprüchen sowie aus der nachfolgenden Beschreibung, in der die Erfindung anhand beigefügter Figuren näher erläutert wird. In den Figuren zeigt:
- Fig. 1: eine Draufsicht auf eine erfindungsgemäße Vorrichtung zum Bewegen von Verpackungszuschnitten und Verpackungen zwischen drei Arbeitsstationen (zum Aufrichten, Befüllen und Verschließen von Verpackungsschachteln) einer Verpackungsmaschine;
- Fig. 2: eine Draufsicht auf eine mit einer erfindungsgemäßen Vorrichtung zum Bewegen von Verpackungszuschnitten und Verpackungen ausgerüsteten erfindungsgemäßen Verpackungsmaschine mit drei Arbeitsstationen (zum Aufrichten, Befüllen und Verschließen von Verpackungsschachteln);
- Fig. 3: eine Vorderansicht einer erfindungsgemäßen Vorrichtung zum Bewegen von Verpackungen mit unterschiedlichen Teilungen der Verpackungen entlang der Bewegungsrichtung;
- Fig. 4: eine vergrößerte, perspektivische Teilansicht einer erfindungsgemäßen Vorrichtung zum Bewegen von Verpackungen im Bereich einer Füllstation zum Befüllen der Verpackungen mit Produkten, wobei aus Übersichtlichkeitsgründen eine Seitenabdeckung entfernt ist; und
- Fig. 5a bis 5c: eine vergrößerte und deutlichere Darstellung in geschnittener Vorderansicht einer erfindungsgemäßen Vorrichtung im Bereich von zwei in Bewegungsrichtung benachbarten Transporteinheiten mit Greifmitteln in Freigabestellung (Fig. 5a), Zwischenstellung (Fig. 5b) und Eingriffsstellung (Fig. 5c).

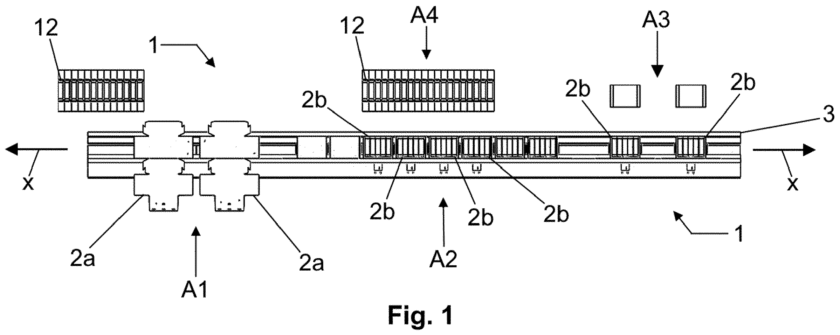

Fig. 1 zeigt eine skizzenhafte Draufsicht auf eine Vorrichtung 1 zum Bewegen von aus Verpackungszuschnitten 2a (Kartonzuschnitten) gefalteten Verpackungen 2b (Verpackungsschachteln), die mit primär verpackten oder nicht primär verpackten Produkten 12 oder Produktgruppen gefüllt werden.

Diese Vorrichtung 1 umfasst ein Führungssystem mit einer feststehenden Führungsschiene 3, von deren Oberfläche 6 die zu transportierenden Verpackungen 2b getragen werden. Die Verpackungen 2b werden entlang einer linearen Bewegungsrichtung x bewegt, die der Längserstreckungsrichtung der Führungsschiene 3 entspricht.

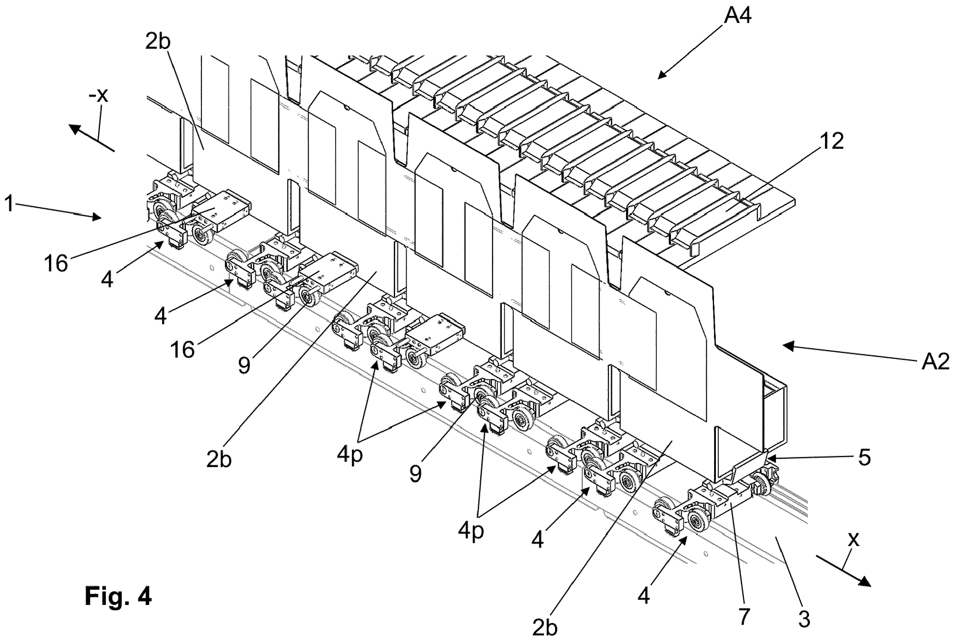

Wie aus der vergrößerten perspektivischen Darstellung der erfindungsgemäßen Vorrichtung 1 gemäß Fig. 4 hervorgeht, sind zur Realisierung dieser linearen Bewegung der Verpackungen 2b entlang der Führungsschiene 3 eine Vielzahl von Transporteinheiten 4 vorgesehen, die jeweils in der Bewegungsrichtung x bewegt werden können und jeweils ein Greifmittel 5 zum Greifen der Verpackung 2b aufweisen. Mit Hilfe dieser Greifmittel 5 transportieren die Transporteinheiten 4 die auf der Oberfläche 6 der Führungsschiene 3 liegenden Verpackungen 2b zu verschiedenen Arbeitsstationen A1, A2, A3 einer Verpackungsmaschine 11.

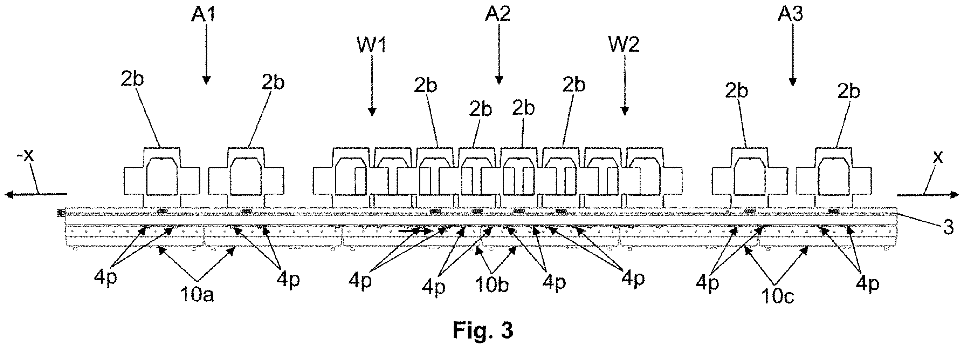

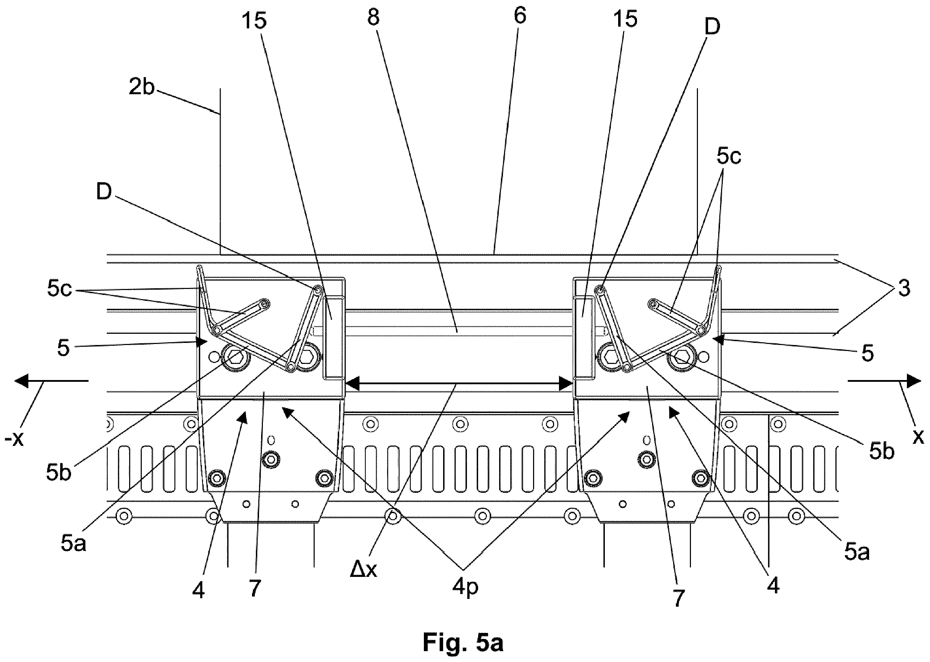

Zwei in Bewegungsrichtung x benachbarte Transporteinheiten 4 bilden ein Paar 4p von Transporteinheiten 4, das in den vergrößerten Darstellungen gemäß Fig. 4 und Fig. 5a bis 5c besser erkennbar ist und dem Transport einer Verpackung 2b in Bewegungsrichtung x dient. Dementsprechend ist also jeder der in Fig. 1 bis 3 dargestellten Verpackungen 2b ein Paar 4p von Transporteinheiten 4 zugeordnet. In den Außenansichten nach Fig. 1 bis 3 sind die Paare 4p von Transporteinheiten 4 nicht oder nur schematisch (siehe Fig. 3) kenntlich gemacht worden, da die Transporteinheiten 4 in diesen Außenansichten jeweils größtenteils nicht sichtbar innerhalb der Führungsschiene 3 aufgenommen sind.

Diese Transporteinheiten 4 sind Bestandteile eines Langstatorlinearmotors. Der Langstatorlinearmotor ist als Transportstrecke konzipiert, die, wie jeweils in Fig. 1 bis 3 gezeigt, linear (offen) ausgestaltet ist. Entlang der Transportstrecke sind eine Vielzahl von Transporteinheiten 4 angeordnet, die jeweils mit Antriebsspulen ausgestattet sind. Unter der Kontrolle einer zentralen Steuereinheit werden diese Antriebsspulen der Transporteinheiten 4 individuell mit einem definierten Spulenstrom (in Größe und Richtung) bestromt, um ein bewegliches Magnetfeld zu erzeugen. Die in Bewegungsrichtung x nebeneinander liegenden Antriebsspulen sind an Schlitten 7 der Transporteinheiten 4 angeordnet, die in einer festen Führungsschiene 3 linear beweglich geführt sind (siehe Fig. 4 und Fig. 5a bis 5c, wo die Antriebsspulen jedoch nicht dargestellt sind). Die Transporteinheiten 4 werden entlang der Transportstrecke in einer Bewegungsrichtung x bewegt und sind dazu jeweils in geeigneter Weise an der stationär angeordneten Vorrichtung 1 über ein Führungssystem mit einer feststehenden Führungsschiene 3 geführt. Eine Transporteinheit 4 kann unabhängig von den anderen Transporteinheiten 4 bewegt werden (in Richtung, Position, Geschwindigkeit und Beschleunigung), indem die Antriebsspulen im Bereich dieser Transporteinheit 4 entsprechend bestromt werden. Das grundlegende Funktionsprinzip eines Langstatorlinearmotors ist hinlänglich bekannt, sodass hier nicht weiter darauf eingegangen wird.

Die von den Transporteinheiten 4 befahrene Transportstrecke kann dabei, je nach Anwendung und Bedarf, beliebig geformt sein und kann geschlossene und/oder offene Streckenabschnitte umfassen. Die Transportstrecke muss dabei keineswegs in einer Horizontalebene liegen, sondern kann auch beliebig im Raum geführt werden.

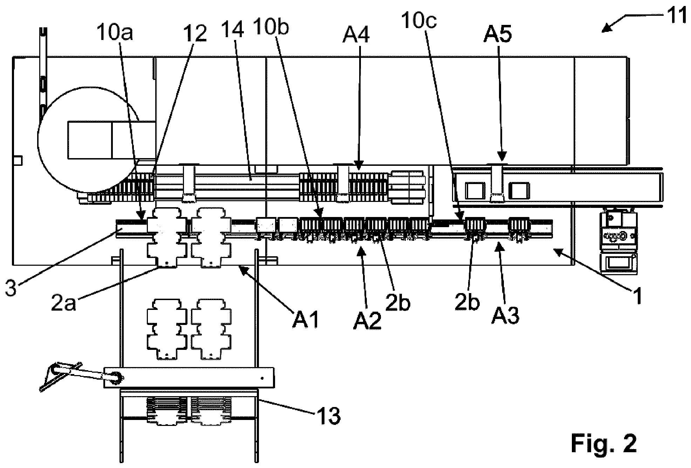

In Fig. 2 wird die Vorrichtung 1 zum Bewegen von Verpackungszuschnitten 2a und Verpackungen 2b integriert in einer erfindungsgemäße Verpackungsmaschine 11 gezeigt, die beispielsweise als Kartonierer für Produkte 12 dient, die in Falteinschlag oder Schlauchbeutel von einer vorgelagerten Verpackungsmaschine bereits primärverpackt wurden.

Verpackungszuschnitte 2a und Verpackungen 2b werden den Arbeitsstationen A1, A2, A3 durch eine Vielzahl von Transporteinheiten 4 zugeführt und entnommen, die entlang der Führungsschiene 3 in der Bewegungsrichtung x verfahren werden. Bei diesen Arbeitsstationen A1, A2, A3, die jeweils auf einer Seite der erfindungsgemäßen Vorrichtung 1 angeordnet sind, handelt es sich um eine Aufrichtstation A1, in der die aus einem Kartonmagazin 13 entnommenen einzelnen Verpackungszuschnitte 2a (Kartonzuschnitte) vollautomatisch aufgerichtet und unten zugeklappt und ggf. verklebt werden, sodass befüllfertige Verpackungen 2b (aufgerichtete, oben offene Verpackungsschachteln) bereitstehen.

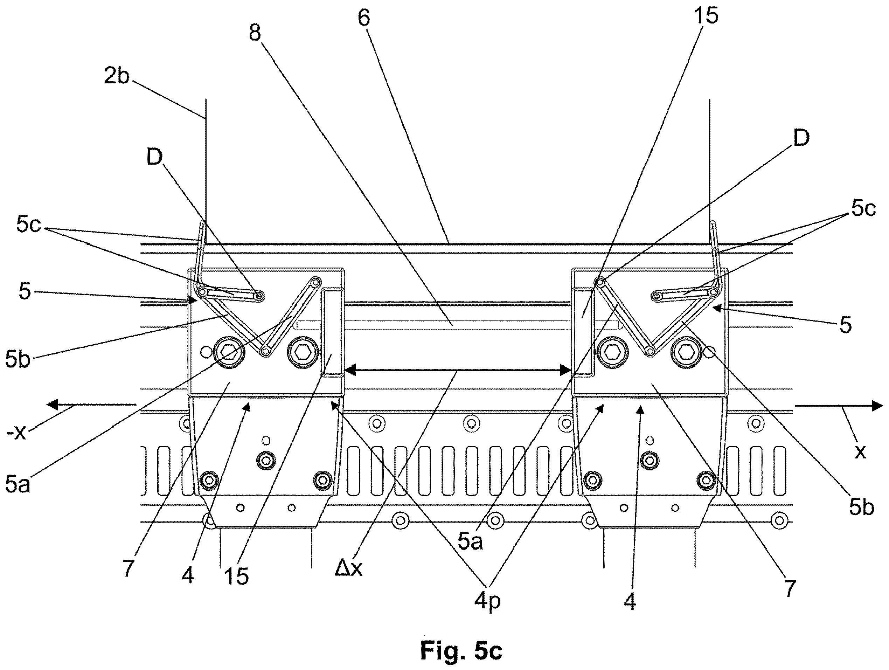

Über die Vorrichtung 1 werden diese Verpackungen 2a (aufgerichtete, oben offene Verpackungsschachteln) dann jeweils mittels der Greifmittel 5 von zwei in Bewegungsrichtung x benachbarten Transporteinheiten 4 (siehe Fig.4 und Fig. 5c) in eine Beladestation A2 transportiert.

Über eine parallel zu Vorrichtung 1 verlaufende Fördereinrichtung 14, die aus einem umlaufend angetriebenen Förderband gebildet wird, werden einzelne Produkte 12 hintereinander in eine Sammelstation A4 transportiert. Ist in der Sammelstation A4 eine gewünschte Gruppengröße der Produkte 12 erreicht, wird die gesamte Gruppe von einem (nicht gezeigten) Einsetzwerkzeug, das z.B. als Saugplatte ausgebildet ist, erfasst, angehoben und von der Sammelstation A4 in die Befüllstation A2 transferiert. Das Einsetzwerkzeug wird dann über der jeweiligen aufgerichteten Verpackung 2b angehalten und in die Befüllstation A2 abgesenkt, sodass die Produktgruppe in die aufgerichtete Verpackung 2b eingesetzt wird.

Anschließend werden die aufgerichteten und befüllten Verpackungen 2b von den Greifmitteln 5 der Transporteinheiten 4, die mit diesen Verpackungen 2b in Eingriff stehen (vgl. Fig.4 und Fig. 5c), entlang der Bewegungsrichtung x weiter zur Verschließstation A3 transportiert. In dieser Verschließstation A3 werden die oberen Kartonlaschen gefaltet und die oberen und ggf. die unteren Kartonlaschen mit Klebeband oder Heißleim verschlossen.

Die fertiggestellte Verpackung 2b wird dann an eine Austragstation A5 weitergegeben, aus welcher die aufgerichteten, befüllten und verschlossenen Verpackungen 2b zur weiteren Lagerung oder für den Versand entfernt werden.

Nach der Übergabe oder Abgabe der Verpackungen 2b können die freigewordenen Paare 4p von Transporteinheiten 4 zum Anfang des entsprechenden Transportstreckenabschnittes 10a, 10b, 10c zurückbewegt werden. Die Greifmittel 5 der Transporteinheiten 4, die diese Rückführbewegung ausführen, befinden sich dabei in einer Freigabestellung, zurückgezogen unter einer die Verpackungen 2b tragenden Oberfläche 6 der Führungsschiene 3 (wie in Fig. 5a gezeigt). Auf diese Weise kann die Rückführbewegung kollisionsfrei mit erhöhter Geschwindigkeit sogar auf der gleichen Strecke wie der Transport der Verpackungen 2b erfolgen.

Die oben erläuterten Arbeitsstationen - insbesondere die Aufrichtstation A1, die Befüllstation A2 und die Verschließstation A3 - haben unterschiedliche Anforderungsprofile, was den Abstand zwischen und die Anzahl an zugeführten Verpackungszuschnitten 2a bzw. Verpackungen 2b angeht. Die erfindungsgemäße Vorrichtung 1 bietet eine Lösung für diese unterschiedlichen Anforderungsprofile, indem den Arbeitsstationen A1, A2, A3 zum Aufrichten, Befüllen und Verschließen voneinander entkoppelte Transportstreckenabschnitte 10a, 10b, 10c (mit einer unterschiedlichen Anzahl und unterschiedlichen Abständen der dort transportierten und gehaltenen Verpackungszuschnitte 2a bzw. Verpackungen 2b) zugeordnet werden. Folglich wird es vorteilhafterweise mit der erfindungsgemäßen Vorrichtung 1 möglich, Arbeitsstationen A1, A2, A3 zu versorgen, die eine unterschiedliche Anzahl paralleler Arbeitsvorgänge realisieren.

So werden, um mehrere parallele Befüllvorgänge in der Befüllstation A2 realisieren zu können, die Verpackungen 2b (Verpackungsschachteln) in dieser Station dicht aneinandergestellt, also mit einem geringen Abstand zwischen den in Bewegungsrichtung x benachbarten Verpackungen 2b. Im Gegensatz dazu ist beim Aufrichten und Verschließen in den vor- und nachgelagerten Arbeitsstationen A1, A3 ein großer Abstand zwischen den in Bewegungsrichtung x nebeneinanderliegenden Verpackungszuschnitten 2a oder Verpackungen 2b erforderlich.

Eine solche unterschiedliche Teilung (hinsichtlich Abstand und Anzahl) der Verpackungszuschnitte 2a und Verpackungen 2b entlang der Bewegungsrichtung x, wie in Fig. 1 bis 3 zu erkennen, wird technisch durch eine Vielzahl von an der Führungsschiene 3 geführten Transporteinheiten 4 realisiert, die entlang einer Bewegungsrichtung x voneinander unabhängig geschwindigkeits- und/oder positionsgeregelt antreibbar angeordnet sind.

Jede Transporteinheit 4 verfügt über ein Greifmittel 5 (siehe Fig. 4 und Fig. 5a bis 5c). Ein Paar 4p von Transporteinheiten 4, die in Bewegungsrichtung x aufeinander folgen und unabhängig voneinander bewegt werden können, kommen mit ihren Greifmitteln 5 jeweils in Anlage mit den in Bewegungsrichtung x gegenüberliegenden Seiten der Verpackung 2b, um die Verpackung 2b in Bewegungsrichtung x mitzubewegen (siehe Fig. 4 und Fig. 5c). Das Greifmittel 5 ist jeweils bewegbar am Schlitten 7 der Transporteinheit 4 gelagert. Im Ausführungsbeispiel gemäß Fig. 5a bis 5c wird die Bewegbarkeit des Greifmittels 5 durch eine um eine Drehachse D drehbare Lagerung des Greifmittels 5 am Schlitten 7 gewährleistet, der seinerseits gleitend verschiebbar in der Führungsschiene 3 aufgenommen ist.

Erfindungsgemäß wird eine Bewegung des Greifmittels 5 der einen Transporteinheit 4 des Paares 4p von Transporteinheiten 4 durch eine Relativbewegung der anderen Transporteinheit 4 dieses Paares 4p von Transporteinheiten 4 eingeleitet. Also wird die Relativbewegung zwischen zwei benachbarten Transporteinheiten 4 dafür genutzt, um die Bewegung der Greifmittel 5 dieser zwei Transporteinheiten 4 auszulösen. Wenn die zwei Transporteinheiten 4 des Paares 4p von Transporteinheiten 4 ihre Position relativ zueinander während des Transportvorganges konstant beibehalten, bewegen sich auch die Greifmittel 5 nicht und verbleiben folglich sicher in der Eingriffsstellung zum Halten und Mitbewegen der Verpackung 2b (wie in Fig. 5c gezeigt). Eine Veränderung der Position dieser zwei Transporteinheiten 4 relativ zueinander führt jedoch zu einer Bewegung der Greifmittel 5 in diesen zwei Transporteinheiten 4.

Wie schematisch in Fig. 3 und genauer in Fig. 4 und Fig. 5a bis 5c dargestellt, ist jeder zu transportierenden Verpackung 2b ein Paar 4p von Transporteinheiten 4 zugeordnet. Angewandt auf die in Fig. 3 dargestellte Verpackungsanordnung bedeutet dies, dass zwei Paare 4p von Transporteinheiten 4 (für zwei Verpackungen 2b) zum dargestellten Zeitpunkt der Aufrichtstation A1 zugeordnet sind, vier Paare 4p von Transsporteinheiten 4 (für vier Verpackungen 2b) zum dargestellten Zeitpunkt der Befüllstation A2 zugeordnet sind und zwei Paare 4p von Transporteinheiten 4 (für zwei Verpackungen 2b) zum dargestellten Zeitpunkt der Verschließstation A3 zugeordnet sind.

Der Abstand Δx zwischen benachbarten Transporteinheiten 4, die ein Paar 4p von Transporteinheiten 4 zum Transport und zur Fixierung eines Verpackungszuschnittes 2a oder einer Verpackung 2b bilden, wird konstant gehalten, sodass die entsprechenden Greifmittel 5 gemäß der in Fig. 4 und Fig. 5c dargestellten Eingriffsstellung in sicherem Kontakt mit der zu transportierenden Verpackung 2b bleiben. Nach der Abgabe oder Übergabe der Verpackung 2b führt eine Vergrößerung des Abstandes Δx zwischen den Transporteinheiten 4 des Paares 4p von Transporteinheiten 4 dazu, dass die entsprechenden Greifmittel 5 in eine Freigabestellung überführt werden (wie in Fig. 5a dargestellt). In dieser Freigabestellung können die Transporteinheiten 4 ungestört mit hoher Geschwindigkeit in einer Rückführrichtung -x zu einer Ausgangsposition des jeweiligen Transportstreckenabschnittes 10a, 10b, 10c zurückbewegt werden.

Alle Transporteinheiten 4 können einzeln hin und her bewegt werden, wobei die Verpackungszuschnitte 2a oder Verpackungen 2b von einer ersten Gruppe von Transporteinheiten 4 entlang eines ersten Transportstreckenabschnittes 10a, 10b und von einer zweiten Gruppe von Transporteinheiten 4 entlang eines angrenzenden zweiten Transportstreckenabschnittes 10a, 10b, 10c transportiert werden. Es kann eine Überlappung zwischen diesen Gruppen von Transporteinheiten 4 vorliegen. Zumindest einige der Transporteinheiten 4 können demnach in beiden Transportstreckenabschnitten 10a, 10b, 10c bewegt werden, um einen Transfer der Verpackungszuschnitte 2a oder der Verpackungen 2b zu realisieren, während andere Transporteinheiten 4 nur innerhalb eines Transportstreckenabschnittes 10a, 10b, 10c bewegt werden können.

Im Folgenden wird zur Beschreibung des Transfers zwischen verschiedenen Transportstreckenabschnitten 10a, 10b, 10c der erfindungsgemäßen Vorrichtung 1, die unterschiedlichen Arbeitsstationen A1, A2, A3 zugeordnet sind, insbesondere auf die Vorderansicht nach Fig. 3 verwiesen. Mit Bezug auf diese Vorderansicht nach Fig. 3 werden die entlang der Bewegungsrichtung x verteilten Paare 4p von Transporteinheiten 4, von denen jedes Paar 4p dem Transport und der Fixierung einer Verpackung 2b dient, im Folgenden - in Fig. 3 von links nach rechts gezählt - als erstes, zweites, drittes, viertes, fünftes, sechstes, siebtes und achtes Paar 4p von Transporteinheiten 4 bezeichnet.

Der Transfer der Verpackungen 2b von der Aufrichtstation A1 zur Befüllstation A2 wird in Fig. 3 von vier Paaren 4p von Transporteinheiten 4 übernommen, nämlich vom ersten, zweiten, dritten und vierten Paar 4p von Transporteinheiten 4.

Das dritte und vierte Paar 4p von Transporteinheiten 4 übernimmt zwei Verpackungen 2b (aufgerichtete leere Verpackungsschachteln) und transportiert diese zunächst zu einer Warteposition W1. Das erste und zweite Paar 4p von Transporteinheiten 4 übernimmt zwei weitere Verpackungen 2b (aufgerichtete leere Verpackungsschachteln) in der Aufrichtstation A1. Vier aufgerichtete leere Verpackungsschachteln werden von dem ersten, zweiten, dritten und vierten Paar 4p von Transporteinheiten 4 gleichzeitig in die freiwerdende Befüllstation A2 transportiert und dort abgestellt.

Die von Verpackungen 2b freigewordenen ersten, zweiten, dritten und vierten Paare 4p von Verpackungseinheiten 4 verlassen die Bewegungsrichtung x des Transportsystems derart, dass sie in einer entgegengesetzten Rückführrichtung -x an den abgestellten Verpackungen 2b vorbei zurückfahren, um wieder Verpackungen 2b (aufgerichtete leere Verpackungsschachteln) in der Aufrichtstation A1 übernehmen zu können. In diesem Fall werden das erste und zweite Paar 4p von Transporteinheiten 4 in einer Warteposition aufgestellt, die sich in Fig. 3 links der Aufrichtstation A1 befindet und nicht dargestellt ist. Das dritte und vierte Paar 4p von Transporteinheiten 4 übernimmt unterdessen in der Aufrichtstation A1 erneut zwei Verpackungen 2b (aufgerichtete leere Verpackungsschachteln).

In dem in Fig. 3 gezeigten Ausführungsbeispiel sind das fünfte, sechste, siebte und achte Paar 4p von Transporteinheiten 5 (von links nach rechts gezählt) für den Transfer von der Befüllstation A2 zur Verschließstation A3 zuständig. Das fünfte, sechste, siebte und achte Paar 4p von Transporteinheiten 4 übernehmen jeweils die Verpackungen 2b (befüllten Verpackungsschachteln) aus der Befüllstation A2 und transportieren sie aus dieser heraus. Das fünfte und sechste Paar von Transporteinheiten 4 fahren hierzu in eine Warteposition W2 der Befüllstation A2. Das siebte und achte Paar von Transporteinheiten 4 transportieren die Verpackungen 2b (befüllten Verpackungsschachteln) direkt in die Verschließstation A3 und stellen sie dort an. Im Anschluss bewegen sich das siebte und achte Paar von Transporteinheiten in eine weitere Warteposition, welche in Fig. 3 rechts der Verschließstation A3 angeordnet und nicht dargestellt ist. Das fünfte und sechste Paar von Transporteinheiten 4 transportieren dann die Verpackungen 2b (befüllten Verpackungsschachteln) zur Verschließstation A3 und legen sie dort ab.

In einer reversierenden Betriebsweise werden das fünfte, sechste, siebte und achte Paar von Transporteinheiten in einer der Bewegungsrichtung x entgegengesetzten Rückführrichtung -x erneut in die Befüllstation A2 bewegt, wo sie die nächsten vier Verpackungen 2b (befüllten Verpackungsschachteln) aufnehmen.

Durch das Abstellen und Fixieren haben die Paare 4p von Transporteinheiten 4 die Möglichkeit, sofort nach Beendigung des Transportvorganges wieder ihren Reversierbetrieb zu starten. Dadurch erreicht die gemäß Fig. 3 ausgestaltete Vorrichtung 1 eine ähnliche Leistungsfähigkeit wie eine z. B. als umlaufendes Oval ausgestaltete Vorrichtung.

Ein weiterer Vorteil der vorbeschriebenen Transfersequenz ergibt sich insbesondere für die Aufrichtstation A1. Die Verpackungsschachteln werden hier aufgerichtet und abgesetzt und müssen dabei nicht präzise in eine schon positionierte Tasche eingesetzt werden. Das entsprechende Paar 4p von Transporteinheiten 4 kommt erst später in die Aufrichtstation A1 und zentriert die abgestellte Verpackungsschachtel bei der Übernahme.

Für die statische Fixierung der Verpackungszuschnitte 2a und Verpackungen 2b während der Durchführung von Arbeitsvorgängen in den Arbeitsstationen A1, A2, A3 sind mehrere Ausführungsvarianten denkbar. Beispielsweise können hier die Verpackungszuschnitte 2a und die Verpackungen 2b jeweils zusätzlich durch Stopperelemente 16 quer zur Bewegungsrichtung x, wie in der vergrößerten Detailansicht nach Fig. 4 zu erkennen, und/oder durch bodenseitiges Ansaugen fixiert werden.

Die Aufricht-, Füll- und Verschließstationen A1, A2, A3 können bei der in Fig. 1 gezeigten Vorrichtung 1 hintereinander in Reihe angeordnet sein, was einen einseitigen Betrieb der Verpackungsmaschine 11 im Einklang mit Fig. 2 ermöglicht. Durch ihre lineare, offene Form kann die Vorrichtung wirtschaftliche Nachteile aufgrund von Förderstreckenabschnitten, die alleine zwecks Rückführung der Transporteinheiten 4 vorzusehen sind, vermeiden.

Insbesondere erlaubt die in Fig. 1 gezeigte Konfiguration der erfindungsgemäßen Vorrichtung 1 als lineares, offenes System die Realisierung des in Fig. 2 gezeigten einseitigen Bedienkonzeptes der Verpackungsmaschine 11 in Form eines Hochleistungskartoniersystems, das speziell für die direkte Ankopplung an Primärverpackungsmaschinen mit hoher Leistung ausgelegt ist. Der modulare Aufbau der Vorrichtung 1 bietet jedoch eine hohe Flexibilität für die Integration auch in andere Arten von Verpackungsmaschinen. In jedem Fall können durch eine solche Vorrichtung 1 die parallelen Arbeitsvorgänge des Aufrichtens, Befüllens und Verschließens voneinander entkoppelt werden, um die Leistungsfähigkeit des Gesamtsystems zu erhöhen.

Dies wird durch ein intelligentes Transportsystem mit einer Vielzahl von Transporteinheiten 4 erreicht, die unabhängig voneinander geschwindigkeits- und/oder positionsgeregelt angetrieben werden. Dabei können - wie in Fig. 2 gezeigt - die Aufricht-, Befüll- und Verschließstationen A1, A2, A3 weiterhin in Reihe angeordnet sein, um eine einseitige Bedienbarkeit der Verpackungsmaschine 1 sicherzustellen, ohne dass beispielsweise ein lang bauendes Oval notwendig wäre. Die Transporteinheiten 4 nutzen die lineare Transportstrecke gleichzeitig als Rückführstrecke. Dadurch reduziert sich das System im Wesentlichen auf einen reversierbaren Langstatorlinearmotor. Zur Durchsatzoptimierung bewegen sich die Transporteinheiten 4 (mit in die Freigabestellung eingefahrenen Greifmitteln 5) entlang der Rückführrichtung -x mit einer deutlich höheren Rückführgeschwindigkeit im Vergleich zur Transportgeschwindigkeit entlang der Bewegungsrichtung x bewegt werden.

Fig. 4 und Fig. 5a bis 5c zeigen schematisch jeweils in vergrößerter Ansicht den inneren Aufbau der Vorrichtung 1, der den Transport der Verpackung 2b in der Bewegungsrichtung x und die Rückführung der Transporteinheiten 4 in der Rückführrichtung -x ermöglicht. Jede Verpackung 2b (Verpackungsschachtel) wird von einem Paar 4p von in Bewegungsrichtung benachbarten Transporteinheiten 4 transportiert. Diese Transporteinheiten 4 bestehen jeweils aus einem innerhalb der Führungsschiene 3 angeordneten und sowohl entlang der Bewegungsrichtung x als auch entlang der entgegengesetzten Rückführrichtung -x bewegbaren Schlitten 7 und einem am Schlitten 7 um eine Drehachse D drehbar gelagerten Greifmittel 5.

Aus Fig. 4 geht hervor, dass die Schlitten 7 der Transporteinheiten 4 jeweils über Führungsrollen 9 in Bewegungs- und Rückführrichtung x, -x verschiebbar in der Führungsschiene 3 angeordnet sind. Außerdem sorgen jeweils zwei seitliche Stopperelemente 16 dafür, dass eine Verpackung 2b, die von Greifmitteln 5 jeweils an ihren in der Bewegungsrichtung x gegenüberliegenden Verpackungsseiten gehalten wird, auch in seitlicher Richtung eine zusätzliche Absicherung gegen ein Herausfallen erhält.

Die beiden in Bewegungsrichtung x benachbarten Transporteinheiten 4, die dem Transport einer Verpackung 2b dienen, sind durch ein mechanisches Kopplungsmittel in Form einer Schubstange 8 miteinander verbunden, die in jeder der beiden Transporteinheiten 4 in einer Linearführung 15 linear verschiebbar geführt ist. Da die zwei Transporteinheiten 4 aber durch das Linearmotorsystem unabhängig voneinander angetrieben werden, lässt sich trotz der verbindenden Schubstange 8 der Abstand Δx zwischen den Transporteinheiten 4 weiterhin je nach Bedarf durch individuelle Antriebssteuerung beliebig verändern.

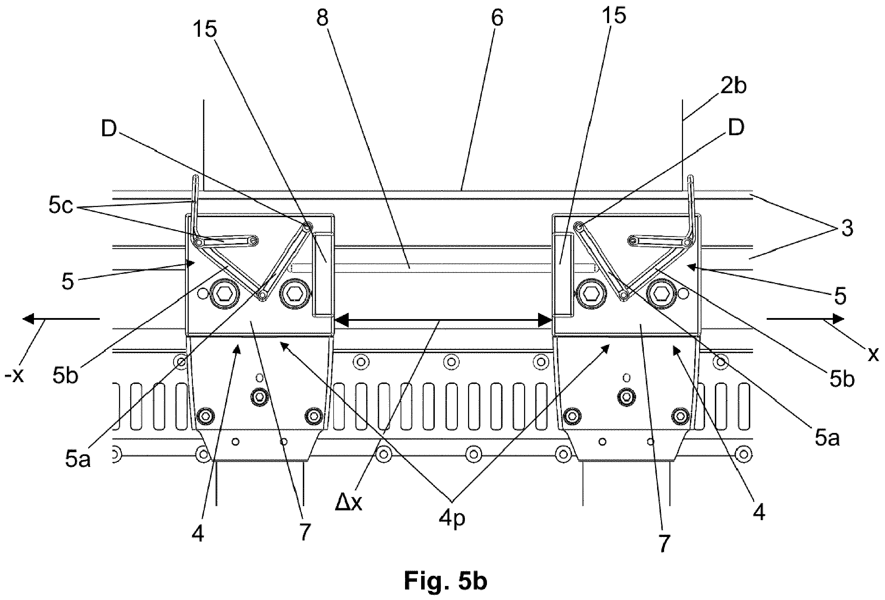

Die in den zwei Transporteinheiten 4 jeweils drehbar am Schlitten 7 gelagerten Greifmittel 5 werden von den Enden der Schubstange 8 drückend kontaktiert. Infolgedessen ruft eine Veränderung des Abstandes Δx zwischen den zwei Transporteinheiten 4 eine Veränderung der von der Schubstange 8 auf die zwei Greifmittel 5 ausgeübten Auslenkung zur Einleitung einer Drehung um ihre Drehachse D hervor. Wenn sich dieser Abstand Δx im Einklang mit Fig. 5b und 5c verringert, nimmt die Länge der Endabschnitte der Schubstange 8, die sich auf beiden Seiten aus der jeweiligen Linearführung 15 herausbewegen, jeweils zu und damit auch die Auslenkung, die jeweils von der Schubstange 8 auf die Greifmittel 5 übertragen wird. Vergrö-βert man hingegen im Einklang mit Fig. 5a den Abstand Δx zwischen den zwei Transporteinheiten 4, dann nimmt die Länge der jeweils aus den Linearführungen 15 herausragenden Endabschnitte der Schubstange 8 und somit auch jeweils die durch die Schubstange 8 auf die beiden Greifmittel 5 ausgeübte Auslenkung zur Drehung um die Drehachse D ab.

Durch eine geeignete Gestaltung des Greifmittels 5 wird die oben erwähnte Änderung der von der Schubstange 8 übertragenen Auslenkung ausgenutzt, um zwischen einem Eingriffszustand der Greifmittel 5 (gemäß Fig. 4 und Fig. 5c) und einem Außereingriffszustand (Freigabezustand) der Greifmittel 5 (gemäß Fig. 5a) zu wechseln. Zu diesem Zweck ist das Greifmittel 5 als L-förmiger Hebel ausgebildet, mit einem ersten Hebelarm 5a, der an seinem einen Ende um die Drehachse D, die senkrecht zur Bewegungsrichtung x verläuft, drehbar gelagert und an seinem anderen Ende fest mit einem zweiten Hebelarm 5b verbunden ist, der gegenüber dem ersten Hebelarm 5a abgewinkelt ist. Der erste Hebelarm 5a wird vom Ende der Schubstange 8 drückend kontaktiert und der zweite Hebelarm 5b ist an seinem dem ersten Hebelarm 5a abgewandten Ende mit zwei gegenüber dem zweiten Hebelarm 5b abgewinkelten Greiffingern 5c fest verbunden. In der Eingriffsstellung liegen diese Greiffinger 5c sowohl an der Bodenfläche als auch an der (in oder gegen die Bewegungsrichtung x weisenden) Seitenfläche der Verpackung 2b an, um diesen oder diese in der Bewegungsrichtung x zu bewegen.

Fig. 5a zeigt eine Freigabestellung (Außereingriffsstellung) der Greifmittel 5. Der in Bewegungsrichtung x bestehende Abstand Δx zwischen den zwei Transporteinheiten 4 ist so groß eingestellt, dass der erste Hebelarm 5a von der Schubstange 8 nur eine geringe oder gar keine Auslenkung erfährt. Demzufolge werden der erste Hebelarm 5a und der damit fest verbundene zweite Hebelarm 5b in keine oder nur eine geringfügige Drehung um die Drehachse D versetzt.

Daher verbleiben die am Ende des zweiten Hebelarms 5b angeformten Greiffinger 5c in einer unter der Oberfläche 6 der Führungsschiene 3 zurückgezogenen Stellung. In dieser Freigabestellung kann die Transporteinheit 4 in Rückführrichtung -x bewegt werden, ohne dass ein Mitbewegen von auf der Oberfläche 6 der Führungsschiene 3 aufliegenden Verpackungen 2b erfolgt.

Fig. 5b zeigt eine Zwischenstellung, die während des Übergangs der Greifmittel 5 von der in Fig. 5a illustrierten Freigabestellung zu der in Fig. 4 und Fig. 5c illustrierten Eingriffsstellung, erreicht wird. Der Abstand Δx zwischen den beiden Transporteinheiten 4 in Fig. 5b hat sich im Vergleich zum Abstand Δx zwischen den beiden Transporteinheiten 4 in Fig. 5a durch eine entsprechend gesteuerte Veränderung der relativen Positionen der beiden Transporteinheiten 4 entlang der Führungsschiene 3 verringert. Infolge dieser Verringerung des Abstandes Δx wird über die Enden der Schubstange 5 jeweils eine Auslenkung in den ersten Hebelarm 5a eingeleitet, die ihn in Drehung um die Drehachse D an seinem freien Ende versetzt. Infolge dieser Drehung wird das Ende des zweiten Hebelarms 5b, an dem die beiden Greiffinger 5c angeformt sind, weiter in Richtung der Oberfläche 6 der Führungsschiene 3 bewegt (siehe Fig. 5b).

In Fig. 5c erreicht der Abstand Δx zwischen den zwei benachbarten Transporteinheiten 4 einen minimalen Wert. Dadurch erreicht auch eine Länge der aus den Linearführungen 15 herausbewegten Endabschnitte der Schubstange 8 und damit eine Drehung der Greifmittel 5 um die Drehachse D jeweils einen maximalen Wert. Bei dieser in Fig. 5c gezeigten maximalen Drehung der Greifmittels 5 kommt das die Greiffinger 5c tragende Ende des zweiten Hebelarms 5b nahe an die Oberfläche 6, auf der die zu transportierende Verpackung 2b liegt. Infolgedessen gelangt einer der beiden Greiffinger 5c mit der Bodenfläche der zu transportierenden Verpackung 2b in Anlage, während der andere der beiden Greiffinger 5c aus der Oberfläche 6 heraustaucht, um mit der Seitenfläche der Verpackung 2b, die in Bewegungsrichtung x (im Fall der einen Transporteinheit 4) bzw. in Rückführrichtung -x (im Fall der anderen Transporteinheit) weist, in Anlage zu gelangen. Im Ergebnis ist in der Eingriffsstellung gemäß Fig. 5c sichergestellt, dass die Verpackung 2b von den insgesamt vier an drei Verpackungsseiten anliegenden Greiffingern 5c sicher und schonend gegriffen und in Bewegungsrichtung x mitbewegt wird, wenn der vom Linearmotor angetriebene Schlitten 7 der Transporteinheit 4 in der Führungsschiene 3 läuft.

Ein weiterer Vorteil dieser Anordnung der Greiffinger 5c ergibt sich für die Verschließstation A3. Die Greiffinger 5c stehen hier den Seitenlaschen beim Verschließen nicht im Wege, was das Versiegeln vereinfacht und auch die Andrückzeiten des Klebemittels (z.B. Heißleims) vorteilhaftweise verlängert.

Andere mechanische Kopplungsmittel zum Antreiben einer Dreh- und/oder Linearbewegung der Greifmittel 5 sind ebenfalls denkbar. Wesentlich ist nur, dass ein derartiges mechanisches Kopplungsmittel die Änderung des Abstandes Δx zwischen den Transporteinheiten 4 in eine entsprechende Eingriffs- und Außereingriffsbewegung der Greifmittel 5 dieser Transporteinheiten 4 konvertiert, sodass keine zusätzlichen, teuren Aktoren, Sensoren und Steuereinheiten für diese Greifmittelbewegungen vorgesehen werden müssen. Nur bei einem Formatwechsel des Verpackungsmaterials muss vor Beginn der neuen Produktionsserie eine mechanische Nachjustierung der mechanischen Kopplungsmittel in Anpassung an die neue Länge der Verpackung 2b in Bewegungsrichtung x erfolgen.

Die erfindungsgemäße Vorrichtung 1 ermöglicht zur Leistungssteigerung der daran angeschlossenen Verpackungsmaschine 11 einen intelligenten Verpackungstransport in Anpassung an verschiedene Arbeitsstationen A1, A2, A3 der Verpackungsmaschine 11 mit unterschiedlichem Durchsatz an Verpackungen 2b pro Zeiteinheit. Insbesondere ermöglicht diese Vorrichtung 1 einen intelligenten Verpackungstransport zwischen einer Aufrichtstation A1 zum Aufrichten der Verpackungen 2b aus den Verpackungszuschnitten 2a, einer Füllstation A2 zum Befüllen der Verpackungen 2b mit Produkten 12 oder Produktgruppen und einer Verschließstation A3 zum Verschließen der befüllten Verpackungen 2b. Darüber hinaus können die Nachteile von umlaufenden Fördersystemen vermieden werden, indem die Transporteinheiten 4 im Reversierbetrieb auf derselben Bewegungsbahn wie im Transportbetrieb und lediglich in einer entgegengesetzten Richtung bewegt werden.

### Bezugszeichenliste

- 1: Vorrichtung zum Bewegen von Verpackungen
- 2a: Verpackungszuschnitt
- 2b: Verpackung
- 3: Führungsschiene
- 4: Transporteinheit
- 4p: Paar von Transporteinheiten
- 5: Greifmittel
- 5a: erster Hebelarm (des Greifmittels)
- 5b: zweiter Hebelarm (des Greifmittels)
- 5c: Greiffinger (des Greifmittels)
- 6: Oberfläche (der Führungsschiene)
- 7: Schlitten (der Transporteinheit)
- 8: mechanisches Kopplungsmittel/Schubstange
- 9: Führungsrolle
- 10a, 10b, 10c: Transportstreckenabschnitt (der Vorrichtung)
- 11: Verpackungsmaschine
- 12: Produkt
- 13: Kartonmagazin
- 14: Fördereinrichtung (für Produkte)
- 15: Linearführung (für Schubstange)
- 16: Stopperelement
- A1: Arbeitsstation/Aufrichtstation
- A2: Arbeitsstation/Befüllstation
- A3: Arbeitsstation/Verschließstation
- A4: Sammelstation
- A5: Austragsstation
- D: Drehachse (des Greifmittels)
- W1, W2: Warteposition (der Befüllstation)
- x: Bewegungsrichtung
- -x: Rückführrichtung
- Δx: Abstand (zwischen Transporteinheiten)

## Patentansprüche

1. Vorrichtung (1) zum Bewegen von Verpackungen (2b), insbesondere Schachteln, umfassend eine Vielzahl von Transporteinheiten (4), die entlang einer Bewegungsrichtung (x) voneinander unabhängig geschwindigkeits- und/oder positionsgeregelt antreibbar angeordnet sind, wobei jede Transporteinheit (4) mindestens ein Greifmittel (5) aufweist, das zwischen einer Eingriffsstellung, bei welcher das mindestens eine Greifmittel (5) die Verpackung (2b) in der Bewegungsrichtung (x) mitbewegt, und einer Freigabestellung, bei welcher das mindestens eine Greifmittel (5) von der Verpackung (2b) getrennt ist, bewegbar an der jeweiligen Transporteinheit (4) gelagert ist,
**dadurch gekennzeichnet, dass**
zwei in Bewegungsrichtung (x) benachbarte Transporteinheiten (4) jeweils mechanisch derart miteinander gekoppelt sind, dass durch eine Veränderung eines zwischen diesen zwei Transporteinheiten (4) entlang der Bewegungsrichtung (x) bestehenden Abstandes (Δx) die Greifmittel (5) dieser zwei Transporteinheiten (4) von der Eingriffsstellung (6) in die Freigabestellung (7) oder umgekehrt überführbar sind.

2. Vorrichtung (1) nach Anspruch 1, **dadurch gekennzeichnet, dass** das mindestens eine Greifmittel (5) in der einen der zwei benachbarten Transporteinheiten (4) und das mindestens eine Greifmittel (5) in der anderen der zwei benachbarten Transporteinheiten (4) derart voneinander beabstandet sind, dass diese Greifmittel (5) in der Eingriffsstellung jeweils an in der Bewegungsrichtung (x) gegenüberliegenden Seiten der Verpackung (2b) zur Anlage kommen.

3. Vorrichtung (1) nach Anspruch 1 oder 2, **dadurch gekennzeichnet, dass** die Vielzahl von Transporteinheiten (4) berührungslos magnetisch oder pneumatisch gelagert sind.

4. Vorrichtung (1) nach Anspruch 1 oder 2, **dadurch gekennzeichnet, dass** die Vorrichtung (1) weiter mindestens ein Führungssystem mit einer feststehenden Führungsschiene (3), an der die Vielzahl von Transporteinheiten (4) geführt sind, umfasst.

5. Vorrichtung (1) nach Anspruch 4, **dadurch gekennzeichnet, dass** das mindestens eine Greifmittel (5) in der Eingriffsstellung zumindest teilweise aus einer die zu bewegenden Verpackungen (2b) tragenden Oberfläche (6) der Führungsschiene (3) hervorsteht und das mindestens eine Greifmittel (5) in der Freigabestellung vollständig unterhalb dieser Oberfläche (6) der Führungsschiene (3) liegt.

6. Vorrichtung (1) nach einem der vorhergehenden Ansprüche 1 bis 5, **dadurch gekennzeichnet, dass** das mindestens eine Greifmittel (5) um eine Drehachse (D) drehbar und/oder entlang einer Linearachse verschiebbar an einem in der Bewegungsrichtung (x) bewegbaren Schlitten (7) der Transporteinheit (4) gelagert ist, wobei diese Drehachse (D) und/oder diese Linearachse mit der Bewegungsrichtung (x) einen Winkel, insbesondere einen rechten Winkel, einschließt.

7. Vorrichtung (1) nach einem der vorhergehenden Ansprüche 1 bis 6, **dadurch gekennzeichnet, dass** die mechanische Kopplung mittels einer Schubstange (8) erfolgt, deren eines Ende das mindestens eine Greifmittel (5) in einer der zwei benachbarten Transporteinheiten (4) kontaktiert und deren anderes Ende das mindestens eine Greifmittel (5) in der anderen der zwei benachbarten Transporteinheiten (4) kontaktiert.

8. Vorrichtung (1) nach Anspruch 7, **dadurch gekennzeichnet, dass** die Schubstange (8) in den zwei benachbarten Transporteinheiten (4) jeweils linear verschiebbar geführt ist.

9. Vorrichtung (1) nach Anspruch 7, **dadurch gekennzeichnet, dass** die Schubstange (8) an ihren beiden Enden jeweils mit dem mindestens einen Greifmittel (5) gelenkig verbunden ist.

10. Vorrichtung (1) nach einem der vorhergehenden Ansprüche 7 bis 9, **dadurch gekennzeichnet, dass** das Greifmittel (5) als Hebel ausgebildet ist, wobei ein erster Hebelarm (5a) an seinem einen Ende drehbar gelagert ist und an seinem anderen Ende mit einem gegenüber dem ersten Hebelarm (5a) abgewinkelten zweiten Hebelarm (5b) fest verbunden ist, und wobei der erste Hebelarm (5a) mit dem Ende der Schubstange (8) in Kontakt steht und der zweite Hebelarm (5b) an seinem vom ersten Hebelarm (5a) abgewandten Ende mit mindestens einem, gegenüber dem zweiten Hebelarm (5b) abgewinkelten Greiffinger (5c) fest verbunden ist, der in der Eingriffsstellung an der Verpackung (2b) anliegt, um diese in der Bewegungsrichtung (x) mitzubewegen.

11. Vorrichtung (1) nach einem der vorhergehenden Ansprüche 1 bis 10, **dadurch gekennzeichnet, dass** die Führungsschiene (3) eine in einer Horizontalebene liegende, offene, insbesondere lineare, Form besitzt.

12. Vorrichtung (1) nach einem der vorhergehenden Ansprüche 1 bis 11, **dadurch gekennzeichnet, dass** die Transporteinheiten (4) mit dem jeweils mindestens einen in der Freigabestellung befindlichen Greifmittel (5) in einer zur Bewegungsrichtung (x) entgegengesetzten Rückführrichtung (-x) reversierend bewegbar sind.

13. Verpackungsmaschine (11), insbesondere Kartonierer für primärverpackte Produkte (12),
**dadurch gekennzeichnet, dass** sie mit mindestens einer Vorrichtung (1) zum Bewegen von Verpackungen (2b) nach einem der vorhergehenden Ansprüche 1 bis 12 ausgerüstet ist.

14. Verpackungsmaschine (11) nach Anspruch 11, **dadurch gekennzeichnet, dass** die mindestens eine Vorrichtung (1) derart konfiguriert ist, dass Verpackungen (2b) zwischen verschiedenen Arbeitsstationen (A1, A2, A3) der Verpackungsmaschine (11) mit unterschiedlich großem Durchsatz von Verpackungen (2b) pro Zeiteinheit, wie insbesondere zwischen einer Aufrichtstation (A1) zum Aufrichten der Verpackungen (2b) aus Verpackungszuschnitten (2a), einer Befüllstation (A2) zum Befüllen der Verpackungen (2b) mit Produkten (12) oder Produktgruppen und einer Verschließstation (A3) zum Verschließen der befüllten Verpackungen (2b), bewegbar sind.

15. Verpackungsmaschine (11) nach Anspruch 14, **dadurch gekennzeichnet, dass** die Vorrichtung (1) derart konfiguriert ist, dass die zwischen zwei benachbarten Transporteinheiten (4) bestehenden Abstände (Δx) entlang der Bewegungsrichtung (x) variieren, sodass verschiedene Transportstreckenabschnitte (10a, 10b, 10c) der Vorrichtung (1) in Anpassung an die dem jeweiligen Transportstreckenabschnitt (10a, 10b, 10c) zugeordnete Arbeitsstation (A1, A2, A3) der Verpackungsmaschine (11) verschiedene Teilungen der Transporteinheiten (4) aufweisen.

16. Verfahren zum Bewegen von Verpackungen (2b), insbesondere Schachteln, wobei eine Vielzahl von Transporteinheiten (4) entlang einer Bewegungsrichtung (x) voneinander unabhängig geschwindigkeits- und/oder positionsgeregelt angetrieben werden, und wobei jede Transporteinheit (4) mit mindestens einem Greifmittel (5) versehen ist, das zwischen einer Eingriffsstellung, bei welcher das Greifmittel (5) die Verpackung (2b) mitbewegt, und einer Freigabestellung, bei welcher das Greifmittel (5) von der Verpackung (2b) getrennt ist, bewegbar an der jeweiligen Transporteinheit (4) gelagert wird,
**dadurch gekennzeichnet, dass**
zwei in Bewegungsrichtung (x) benachbarte Transporteinheiten (4) jeweils mechanisch derart miteinander gekoppelt werden, dass durch eine Veränderung eines zwischen diesen zwei Transporteinheiten (4) entlang der Bewegungsrichtung (x) bestehenden Abstandes (Δx) die Greifmittel (5) dieser zwei Transporteinheiten (4) von der Eingriffsstellung in die Freigabestellung oder umgekehrt überführt werden.

17. Verfahren nach Anspruch 16, **dadurch gekennzeichnet, dass** infolge einer Verkleinerung des Abstandes (Δx) von einem die zwei benachbarten Transporteinheiten (4) verbindenden mechanischen Kopplungsmittel (8) eine Kraft auf die Greifmittel (5) dieser zwei Transporteinheiten (4) ausgeübt wird, sodass die Greifmittel (5) gedreht und/oder verschoben werden, um aus der Freigabestellung in die Eingriffsstellung zu gelangen, und dass infolge einer Vergrößerung des Abstandes (Δx) die vom mechanischen Kopplungsmittel (8) ausgeübte Kraft verringert oder ganz aufgehoben wird, sodass die Greifmittel (8) in umgekehrter Richtung selbständig oder unter Zuhilfenahme eines Rückstellmittels gedreht und/oder verschoben werden, um aus der Eingriffsstellung zurück in die Freigabestellung zu gelangen.

## Geänderte Patentansprüche

### Geänderte Patentansprüche gemäss Regel 137(2) EPÜ.

1. Vorrichtung (1) zum Bewegen von Verpackungen (2b), insbesondere Schachteln, umfassend eine Vielzahl von Transporteinheiten (4), die entlang einer Bewegungsrichtung (x) voneinander unabhängig geschwindigkeits- und/oder positionsgeregelt antreibbar angeordnet sind, wobei jede Transporteinheit (4) mindestens ein Greifmittel (5) aufweist, das zwischen einer Eingriffsstellung, bei welcher das mindestens eine Greifmittel (5) die Verpackung (2b) in der Bewegungsrichtung (x) mitbewegt, und einer Freigabestellung, bei welcher das mindestens eine Greifmittel (5) von der Verpackung (2b) getrennt ist, bewegbar an der jeweiligen Transporteinheit (4) gelagert ist, und wobei zwei in Bewegungsrichtung (x) benachbarte Transporteinheiten (4) jeweils mechanisch derart miteinander gekoppelt sind, dass durch eine Veränderung eines zwischen diesen zwei Transporteinheiten (4) entlang der Bewegungsrichtung (x) bestehenden Abstandes (Δx) die Greifmittel (5) dieser zwei Transporteinheiten (4) von der Eingriffsstellung (6) in die Freigabestellung (7) oder umgekehrt überführbar sind,
**dadurch gekennzeichnet, dass**
die mechanische Kopplung mittels einer Schubstange (8) erfolgt, deren eines Ende das mindestens eine Greifmittel (5) in einer der zwei benachbarten Transporteinheiten (4) kontaktiert und deren anderes Ende das mindestens eine Greifmittel (5) in der anderen der zwei benachbarten Transporteinheiten (4) kontaktiert.

2. Vorrichtung (1) nach Anspruch 1, **dadurch gekennzeichnet, dass** das mindestens eine Greifmittel (5) in der einen der zwei benachbarten Transporteinheiten (4) und das mindestens eine Greifmittel (5) in der anderen der zwei benachbarten Transporteinheiten (4) derart voneinander beabstandet sind, dass diese Greifmittel (5) in der Eingriffsstellung jeweils an in der Bewegungsrichtung (x) gegenüberliegenden Seiten der Verpackung (2b) zur Anlage kommen.

3. Vorrichtung (1) nach Anspruch 1 oder 2, **dadurch gekennzeichnet, dass** die Vielzahl von Transporteinheiten (4) berührungslos magnetisch oder pneumatisch gelagert sind.

4. Vorrichtung (1) nach Anspruch 1 oder 2, **dadurch gekennzeichnet, dass** die Vorrichtung (1) weiter mindestens ein Führungssystem mit einer feststehenden Führungsschiene (3), an der die Vielzahl von Transporteinheiten (4) geführt sind, umfasst.

5. Vorrichtung (1) nach Anspruch 4, **dadurch gekennzeichnet, dass** das mindestens eine Greifmittel (5) in der Eingriffsstellung zumindest teilweise aus einer die zu bewegenden Verpackungen (2b) tragenden Oberfläche (6) der Führungsschiene (3) hervorsteht und das mindestens eine Greifmittel (5) in der Freigabestellung vollständig unterhalb dieser Oberfläche (6) der Führungsschiene (3) liegt.

6. Vorrichtung (1) nach einem der vorhergehenden Ansprüche 1 bis 5, **dadurch gekennzeichnet, dass** das mindestens eine Greifmittel (5) um eine Drehachse (D) drehbar und/oder entlang einer Linearachse verschiebbar an einem in der Bewegungsrichtung (x) bewegbaren Schlitten (7) der Transporteinheit (4) gelagert ist, wobei diese Drehachse (D) und/oder diese Linearachse mit der Bewegungsrichtung (x) einen Winkel, insbesondere einen rechten Winkel, einschließt.

7. Vorrichtung (1) nach Anspruch einem der vorhergehenden Ansprüche 1 bis 6, **dadurch gekennzeichnet, dass** die Schubstange (8) in den zwei benachbarten Transporteinheiten (4) jeweils linear verschiebbar geführt ist.

8. Vorrichtung (1) nach Anspruch einem der vorhergehenden Ansprüche 1 bis 6, **dadurch gekennzeichnet, dass** die Schubstange (8) an ihren beiden Enden jeweils mit dem mindestens einen Greifmittel (5) gelenkig verbunden ist.

9. Vorrichtung (1) nach einem der vorhergehenden Ansprüche 1 bis 8, **dadurch gekennzeichnet, dass** das Greifmittel (5) als Hebel ausgebildet ist, wobei ein erster Hebelarm (5a) an seinem einen Ende drehbar gelagert ist und an seinem anderen Ende mit einem gegenüber dem ersten Hebelarm (5a) abgewinkelten zweiten Hebelarm (5b) fest verbunden ist, und wobei der erste Hebelarm (5a) mit dem Ende der Schubstange (8) in Kontakt steht und der zweite Hebelarm (5b) an seinem vom ersten Hebelarm (5a) abgewandten Ende mit mindestens einem, gegenüber dem zweiten Hebelarm (5b) abgewinkelten Greiffinger (5c) fest verbunden ist, der in der Eingriffsstellung an der Verpackung (2b) anliegt, um diese in der Bewegungsrichtung (x) mitzubewegen.

10. Vorrichtung (1) nach Anspruch 4 oder 5, **dadurch gekennzeichnet, dass** die Führungsschiene (3) eine in einer Horizontalebene liegende, offene, insbesondere lineare, Form besitzt.

11. Vorrichtung (1) nach einem der vorhergehenden Ansprüche 1 bis 10, **dadurch gekennzeichnet, dass** die Transporteinheiten (4) mit dem jeweils mindestens einen in der Freigabestellung befindlichen Greifmittel (5) in einer zur Bewegungsrichtung (x) entgegengesetzten Rückführrichtung (-x) reversierend bewegbar sind.

12. Verpackungsmaschine (11), insbesondere Kartonierer für primärverpackte Produkte (12), **dadurch gekennzeichnet, dass** sie mit mindestens einer Vorrichtung (1) zum Bewegen von Verpackungen (2b) nach einem der vorhergehenden Ansprüche 1 bis 11 ausgerüstet ist.

13. Verpackungsmaschine (11) nach Anspruch 12, **dadurch gekennzeichnet, dass** die mindestens eine Vorrichtung (1) derart konfiguriert ist, dass Verpackungen (2b) zwischen verschiedenen Arbeitsstationen (A1, A2, A3) der Verpackungsmaschine (11) mit unterschiedlich großem Durchsatz von Verpackungen (2b) pro Zeiteinheit, wie insbesondere zwischen einer Aufrichtstation (A1) zum Aufrichten der Verpackungen (2b) aus Verpackungszuschnitten (2a), einer Befüllstation (A2) zum Befüllen der Verpackungen (2b) mit Produkten (12) oder Produktgruppen und einer Verschließstation (A3) zum Verschließen der befüllten Verpackungen (2b), bewegbar sind.

14. Verpackungsmaschine (11) nach Anspruch 13, **dadurch gekennzeichnet, dass** die Vorrichtung (1) derart konfiguriert ist, dass die zwischen zwei benachbarten Transporteinheiten (4) bestehenden Abstände (Δx) entlang der Bewegungsrichtung (x) variieren, sodass verschiedene Transportstreckenabschnitte (10a, 10b, 10c) der Vorrichtung (1) in Anpassung an die dem jeweiligen Transportstreckenabschnitt (10a, 10b, 10c) zugeordnete Arbeitsstation (A1, A2, A3) der Verpackungsmaschine (11) verschiedene Teilungen der Transporteinheiten (4) aufweisen.

15. Verfahren zum Bewegen von Verpackungen (2b), insbesondere Schachteln, wobei eine Vielzahl von Transporteinheiten (4) entlang einer Bewegungsrichtung (x) voneinander unabhängig geschwindigkeits- und/oder positionsgeregelt angetrieben werden, wobei jede Transporteinheit (4) mit mindestens einem Greifmittel (5) versehen ist, das zwischen einer Eingriffsstellung, bei welcher das Greifmittel (5) die Verpackung (2b) mitbewegt, und einer Freigabestellung, bei welcher das Greifmittel (5) von der Verpackung (2b) getrennt ist, bewegbar an der jeweiligen Transporteinheit (4) gelagert wird, und wobei zwei in Bewegungsrichtung (x) benachbarte Transporteinheiten (4) jeweils mechanisch derart miteinander gekoppelt werden, dass durch eine Veränderung eines zwischen diesen zwei Transporteinheiten (4) entlang der Bewegungsrichtung (x) bestehenden Abstandes (Δx) die Greifmittel (5) dieser zwei Transporteinheiten (4) von der Eingriffsstellung in die Freigabestellung oder umgekehrt überführt werden,
**dadurch gekennzeichnet, dass**
die mechanische Kopplung mittels einer Schubstange (8) erfolgt, deren eines Ende das mindestens eine Greifmittel (5) in einer der zwei benachbarten Transporteinheiten (4) kontaktiert und deren anderes Ende das mindestens eine Greifmittel (5) in der anderen der zwei benachbarten Transporteinheiten (4) kontaktiert.

16. Verfahren nach Anspruch 15, **dadurch gekennzeichnet, dass** infolge einer Verkleinerung des Abstandes (Δx) von einem die zwei benachbarten Transporteinheiten (4) verbindenden mechanischen Kopplungsmittel (8) eine Kraft auf die Greifmittel (5) dieser zwei Transporteinheiten (4) ausgeübt wird, sodass die Greifmittel (5) gedreht und/oder verschoben werden, um aus der Freigabestellung in die Eingriffsstellung zu gelangen, und dass infolge einer Vergrößerung des Abstandes (Δx) die vom mechanischen Kopplungsmittel (8) ausgeübte Kraft verringert oder ganz aufgehoben wird, sodass die Greifmittel (8) in umgekehrter Richtung selbständig oder unter Zuhilfenahme eines Rückstellmittels gedreht und/oder verschoben werden, um aus der Eingriffsstellung zurück in die Freigabestellung zu gelangen.
